# EUROPEAN PATENT APPLICATION

(11) **EP 4 703 206 A1**
(43) Date of publication of application: **04.03.2026**
(21) Application number: 25192209.2
(22) Date of filing: 28.07.2025
(51) Int. Cl.: B60Q 1/26, B60Q 1/28, B60R 19/52, F21S 43/14, F21S 43/15, F21S 43/19, F21S 43/239, F21S 43/241, F21S 43/243, F21S 43/235, F21S 43/31

(54) **GRILL LIGHT ASSEMBLY AND VEHICLE COMPRISING THE SAME**

(30) Priority: 29.08.2024 CN 202411200313
(71) Applicant: Stellantis Auto SAS, 78300 Poissy (FR)
(72) Inventor: WANG, ZIYE, SHANGHAI, 200030 (CN); CHENG, LU, SHANGHAI, 200030 (CN); LIU, TAO CLAIRE, SHANGHAI, 200030 (CN); SONG, XIU MIN, SHANGHAI, 200030 (CN); LI, BING, SHANGHAI, 200030 (CN)
(74) Representative: ESIP

(57) **Abstract**

The present disclosure relates to a grill light assembly (A) comprising: a grill (200) having a plurality of openings (210) arranged sequentially along a first direction (Y); and a light emitting assembly (300) fixed to the grill (200) and comprising a light source (315) and a plurality of light transmitting members (312) arranged sequentially along the first direction (Y), wherein each of light transmitting members (312) is arranged to face a corresponding opening (210) of the plurality of openings (210) to allow light emitted by the light source (315) to be emitted through the corresponding opening (210). The grill light assembly (A) according to the present disclosure forms a more novel vehicle light type by combining the light assembly with the grill, such that the appearance of the vehicle is harmoniously unified in visual.

## Description

### RELATED FIELD

The present disclosure relates generally to the field of vehicle components, and more specifically to a grill light assembly and a vehicle comprising the same.

### BACKGROUND

The design of vehicle front lights not only focuses on functionality, but also attracts more and more attention to aesthetic and personalized expressions. The existing vehicle lights mostly adopt a through-type design, that is, the front vehicle lights on both sides are connected by a continuous light strip to form a whole. In addition, there are combined vehicle lights, floating vehicle lights, etc.

However, with the changes in the aesthetics of the era and the development of the technology, the existing vehicle lights design are insufficient to meet the personalized needs of consumers for automobiles, so it is necessary to further innovate the vehicle light structures.

### SUMMARY

An object of the present disclosure is to provide a grill light assembly to improve the aesthetics of the vehicle light and the coordination of the vehicle light with the overall design style of the vehicle.

To this end, a first aspect of the present disclosure provides a grill light assembly, comprising: a grill having a plurality of openings arranged sequentially along a first direction; and a light emitting assembly fixed to the grill, wherein the light emitting assembly comprises a light source and a plurality of light transmitting members arranged sequentially along the first direction, wherein each of light transmitting members is arranged to face a corresponding opening of the plurality of openings to allow light emitted by the light source to be emitted through the corresponding opening.

According to an optional embodiment of the present disclosure, the light emitting assembly comprises: a lens being a one-piece member and connected to the grill, wherein the plurality of light transmitting member are formed on the lens; and a housing connected to the lens, wherein the housing and the lens delimit a chamber in which the light source is provided.

According to an optional embodiment of the present disclosure, the lens comprises a first rod and a second rod, each of which extends along the first direction, wherein the first rod is connected to the housing, the first rod and the housing delimiting the chamber, and wherein the plurality of light transmitting members are arranged sequentially between the first rod and the second rod and connecting the first rod to the second rod.

According to an optional embodiment of the present disclosure, the light emitting assembly further comprises a supporting member comprising : a first beam and a second beam, each of which extends along the first direction, wherein the first beam is connected to the first rod and to the grill, and the second beam is connected to the second rod and to the grill; and a plurality of third beams extending along a second direction perpendicular to the first direction, wherein the plurality of third beams are arranged sequentially between the first beam and the second beam and connecting the first beam to the second beam.

According to an optional embodiment of the present disclosure, the first beam is fixed to the first rod by screwing and/or snapping, and/or the first beam is fixed to the grill by screwing and/or snapping.

According to an optional embodiment of the present disclosure, the second beam is fixed to the second rod by screwing and/or snapping, and/or the second beam is fixed to the grill by screwing and/or snapping.

According to an optional embodiment of the present disclosure, each of the plurality of light transmitting members comprises a reflective surface having a textured structure and sheltered by a corresponding third beam of the plurality of third beams.

According to an optional embodiment of the present disclosure, each of the plurality of light transmitting members further comprises a light transmittance surface opposite to the reflective surface, and the grill shelters an edge portion of the light transmittance surface.

According to an optional embodiment of the present disclosure, the grill light assembly further comprises a skin reinforcement fixedly connected to an end of the grill along the second direction and sheltering the light emitting assembly.

A second aspect of the present disclosure provides a vehicle comprising the grill light assembly according to the first aspect of the present disclosure.

Compared with the prior art, the grill light assembly according to the present disclosure has a plurality of advantages, especially: by combining the light emitting assembly with the grill, a more novel vehicle light type is formed, such that the appearance of the vehicle is more harmoniously unified in visual; in addition, the grill light assembly has a simple structure, is convenient to be manufactured and installed, and has low cost, so it can be widely used in various types of vehicles.

### BRIEF DESCRIPTION OF THE DRAWINGS

Other features and advantages of the present disclosure will be better understood through the following preferred embodiments described in detail in connection with accompanying drawings. In the drawings, same reference numerals indicate same or similar components.
FIG. 1 is a schematic illustration of a vehicle showing a mounting area of a grill light assembly according to the present disclosure;
FIG. 2 is a perspective view of one embodiment of a grill light assembly according to the present disclosure;
FIG. 3 is an exploded view of the grill light assembly;
FIG. 4 is an enlarged view of a light emitting assembly in the grill light assembly;
FIG. 5 is an exploded view of the light emitting assembly in the grill light assembly.
FIG. 6 is a cross-sectional view of the grill light assembly taken along the plane CC of FIG. 2;
FIG. 7 is a rear partial perspective view of the grill light assembly.

### DETAILED DESCRIPTION

The implementation and usage of specific embodiments are discussed in detail below. However, it should be understood that the discussed specific embodiments are merely intended to illustrate specific ways of implementing and using the present disclosure, and are not intended to limit the scope of the present disclosure.

In this specification, when describing the structural positions of various components, directional expressions such as "upper", "lower", "left", "right", "front", and "rear" are not absolute, but relative. When the components are arranged as shown in the drawings, these directional expressions are appropriate, but when the positions of the components in the drawings are changed, these directional expressions should be changed accordingly.

In this specification and the accompanying drawings, the X direction corresponds to a longitudinal direction of the vehicle (that is, a front-rear direction representing a traveling direction of the vehicle), the Y direction corresponds to a transverse direction of the vehicle (that is, a left-right direction perpendicular to the front-rear direction in a plane parallel to the ground, and that is, the first direction), and the Z direction corresponds to a vertical direction of the vehicle (that is, an up-down direction perpendicular to the ground, and that is, the second direction).

In addition, in this specification, unless otherwise clearly specified and defined, terms such as "mount" and "connect" should be understood in a broad sense, for example, may be a fixed connection, a detachable connection, or an integral connection; may be a direct connection, an indirect connection through an intermediate medium, or an internal communication between two elements or an interaction relationship between two elements. For those skilled in the art, the specific meanings of the above terms in the present specification can be understood according to specific situations.

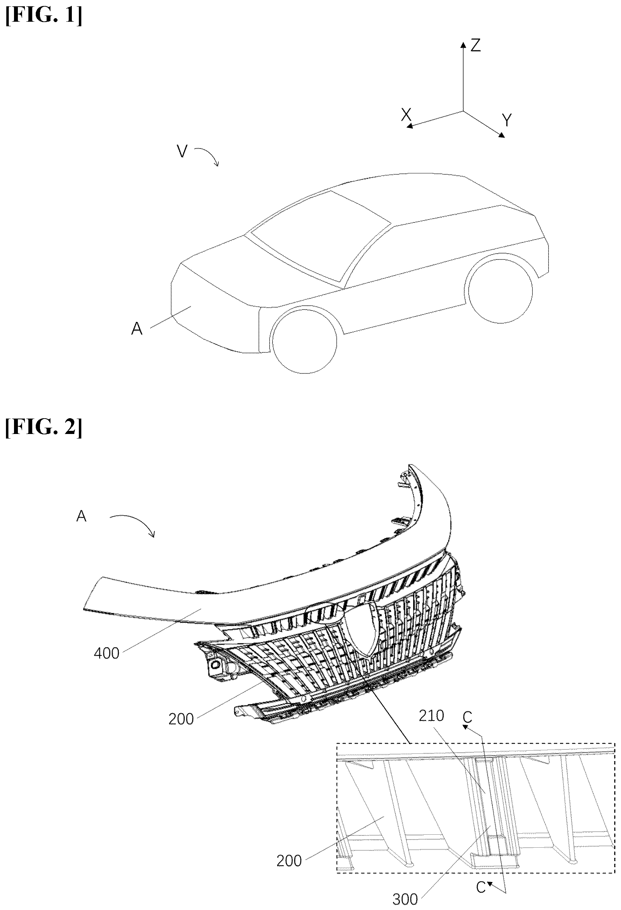

A preferred embodiment of the present disclosure will be described below with reference to FIGS. 1 to 7.

As shown in FIGS. 1 to 3, the grill light assembly A according to the present disclosure comprises a grill 200, a light emitting assembly 300 mounted to the rear side of the grill 200, and a skin reinforcement 400 mounted to the upper end of the grill 200. The grill 200 has a plurality of openings 210 arranged sequentially along the Y direction.

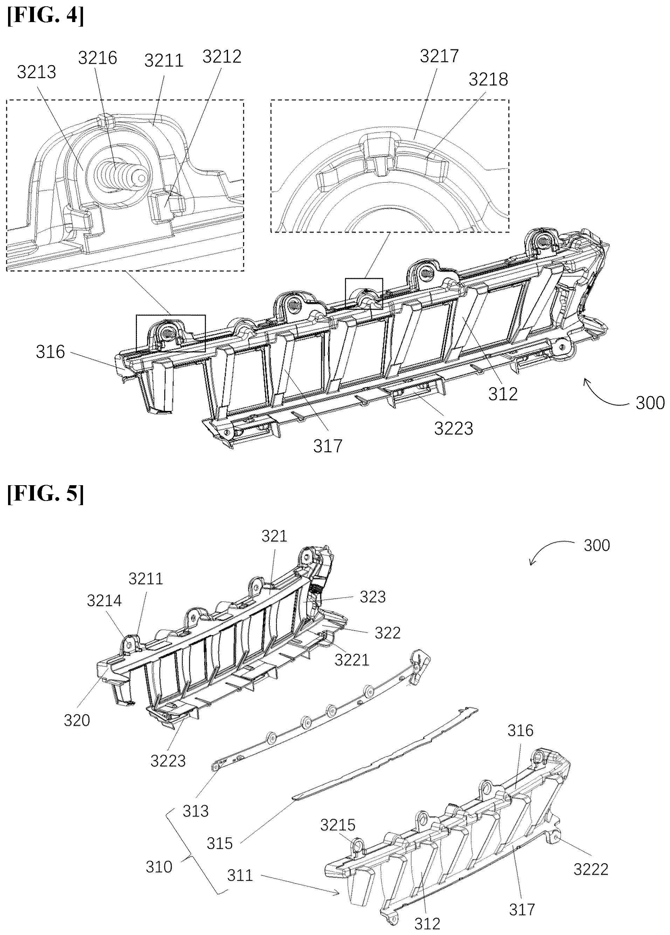

As shown in FIG. 4 to FIG. 6, the light emitting assembly 300 comprises a lens 311, a housing 313, and an LED light source 315. The housing 313 is connected to the lens 311 and delimits the chamber 314 together with the lens 311, and the light source 315 is provided in the chamber 314. The lens 311 is a one-piece member and is fixedly connected to the grill 200, and a plurality of sheet-type light transmitting member 312 arranged sequentially along the Y direction are formed on the lens 311. Each of the light transmitting members 312 is arranged to face a corresponding opening 210 of the plurality of openings 210 of the grill 200 to allow light emitted by the light source 315 to be emitted through the corresponding opening 210.

More specifically, the lens 311 comprises a first rod 316 and a second rod 317 located below the first rod 316, each of which extends along the Y direction, wherein the first rod 316 is connected to the housing 313, the first rod 316 and the housing 313 delimiting the chamber 314, and the plurality of light transmitting members 312 are arranged sequentially between the first rod 316 and the second rod 317 and connecting the first rod 316 to the second rod 317.

The light emitting assembly 300 further preferably comprises a supporting member 320 having a shape corresponding to the lens 311, and comprising: a first beam 321 and a second beam 322 located below the first beam 321, each of which extends along the Y direction, wherein the first beam 321 is connected to the first rod 316 and to the grill 200 along the X direction, and the second beam 322 is connected to the second rod 317 and to the grill 200 along the X direction; and a plurality of third beams 323 extending along the Z direction perpendicular to the Y direction, wherein the plurality of third beams 323 are arranged sequentially between the first beam 321 and the second beam 322 and connecting the first beam 321 to the second beam 322.

In the grill light assembly A, the first beam 321 is fixed to the first rod 316, for example, by screwing and/or snapping, and/or the first beam 321 is fixed to the grill 200, for example, by screwing and/or snapping; the second beam 322 is fixed to the second rod 317, for example, by screwing and/or snapping, and/or the second beam 322 is fixed to the grill 200, for example, by screwing and/or snapping.

In the illustrated embodiment, as shown in FIG. 4 and FIG. 5, the first beam 321 is sequentially provided with a plurality of first snapping slots 3211 along the Y direction, each of the first snapping slots 3211 is provided with two symmetrical snapping protrusions 3212, and the first rod 316 is correspondingly provided with a plurality of first snapping tongues 3213 snap-fitted with the snapping protrusions 3212 in the first snapping slots 3211. In addition, each of the first snapping slots 3211 is provided with a first through hole 3214, each of the first snapping tongues 3213 is provided with a second through hole 3215 aligned with the first through hole 3214 along the X direction, and the grill 200 is provided with a plurality of third through holes (not shown in the figures) aligned with the first through holes 3214 and the second through holes 3215 along the X direction, so as to tightly connect the lens 311, the supporting member 320 and the grill 200 to each other through a plurality of screws 3216 passing through the corresponding first through holes 3214, second through holes 3215 and third through holes. The first beam 321 is further provided with a plurality of additional limiting slots 3217, the plurality of additional limiting slots 3217 and the plurality of first snapping slots 3211 are alternately arranged along the Y direction, and the first rod 316 is correspondingly provided with a plurality of additional limiting protrusions 3218 mated with the plurality of limiting slots 3217, so as to assist in limiting the lens 311 and the supporting member 320 with each other.

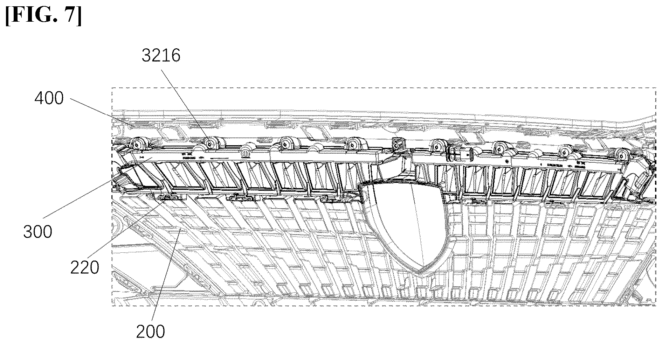

Two ends of the second beam 322 along the Y direction are provided with fourth through holes 3221, and two ends of the second rod 317 are correspondingly provided with fifth through holes 3222 aligned with the fourth through holes 3221 along the X direction, so as to connect the second beam 322 to the second rod 317 through screws passing through the corresponding fourth through holes 3221 and fifth through holes 3222. In addition, the second beam 322 is further sequentially provided with a plurality of second snapping slots 3223 along the Y direction, and the grill 200 is correspondingly provided with a second snapping tongue 220 (as shown in FIG. 7) snap-fitted with the second snapping slot 3223, such that the lower end of the lens 31 is tightly fixed between the supporting member 320 and the grill 200.

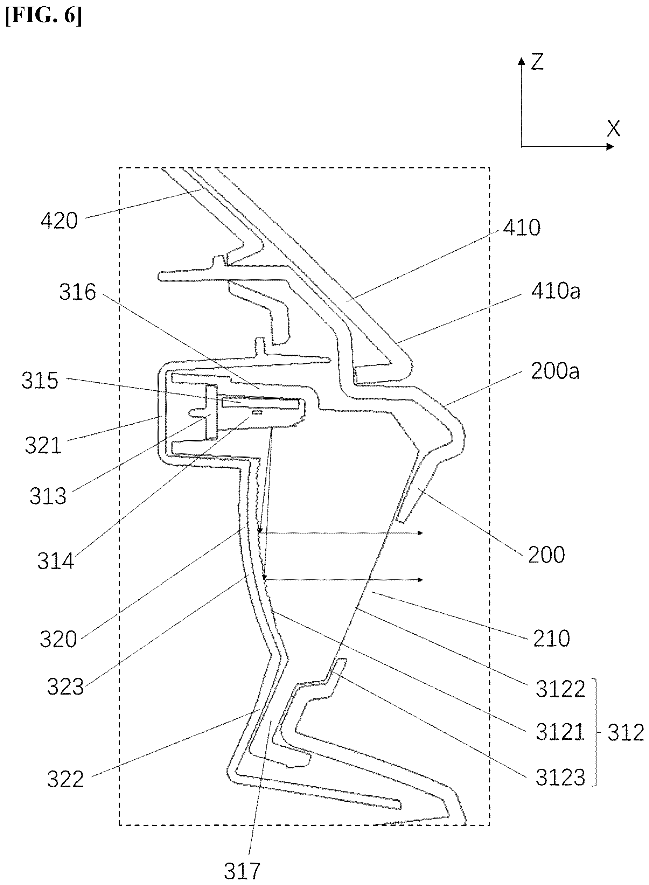

As shown in FIG. 6, each of the plurality of light transmitting members 312 comprises a reflective surface 3121 having a textured structure, which is sheltered and protected by a corresponding third beam 323 of the plurality of third beams 323 along the X direction. Each of the plurality of light transmitting members 312 further comprises a light transmittance surface 3122 opposite to the reflective surface 3121, and the grill 200 shelters an edge portion of the light transmittance surface 3122 to conceal the relatively darker regions, such as upper and lower edge portions, on the light transmittance surface 3122. The indicated lines with an arrow in the figure show the reflection path of the light, and the light emitted from the LED light source 315 passes through the light transmittance surface 3122 after being reflected by the reflective surface 3121, and is emitted forward along the X direction through the corresponding opening 210 of the grill 200.

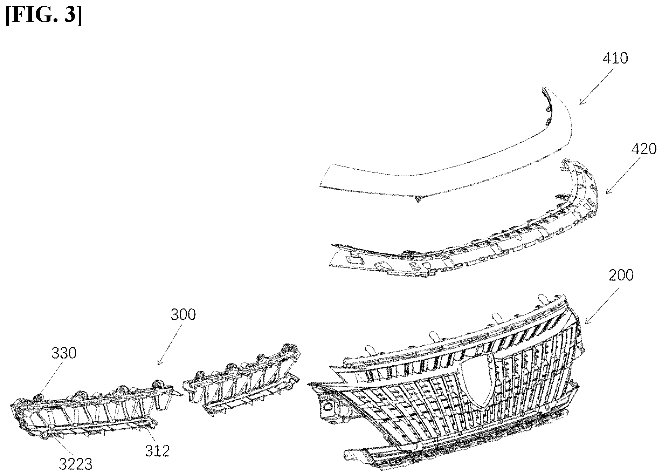

As shown in FIG. 3, FIG. 5, and FIG. 6, the skin reinforcement 400 is fixedly connected to the upper end of the grill 200 along the Z direction by, for example, snapping, screwing, welding, and the like, and shelters the light emitting assembly 300 behind the grill 200. The skin reinforcement 400 comprises, for example, a body 410 (also referred to as a bumper soft nose) and a body supporting member 420 connected to the rear side of the body 410. The outer surface 410a of the body 410 is substantially flush with the outer surface portion 200a of the grill 200 adjacent to the body 410 to ensure aesthetic appearance, and the skin reinforcement 400 can prevent rainwater from directly contacting the light emitting assembly 300.

The technical contents and features of the present disclosure have been disclosed above. However, it is conceivable that, those skilled in the art can make various changes and improvements to the above concept under the creative idea of the present disclosure, all of which fall within the protection scope of the present disclosure.

The description of the foregoing embodiments is illustrative rather than limitative, and the scope of protection of the present disclosure is determined by the appended claims.

## Claims

1. A grill light assembly (A), comprising:
a grill (200) having a plurality of openings (210) arranged sequentially along a first direction (Y); and
a light emitting assembly (300) fixed to the grill (200), wherein the light emitting assembly (300) comprises a light source (315) and a plurality of light transmitting members (312) arranged sequentially along the first direction (Y), wherein each of the light transmitting members (312) is arranged to face a corresponding opening (210) of the plurality of openings (210) to allow light emitted by the light source (315) to be emitted through the corresponding opening (210).

2. The grill light assembly (A) according to claim 1, wherein the light emitting assembly (300) comprises:
a lens (311) being a one-piece member and connected to the grill (200), wherein the plurality of light transmitting member (312) are formed on the lens (311); and
a housing (313) connected to the lens (311), wherein the housing(313) and the lens (311) delimit a chamber (314) in which the light source (315) is provided.

3. The grill light assembly (A) according to claim 2, wherein the lens (311) comprises a first rod (316) and a second rod (317), each of which extends along the first direction (Y), wherein the first rod (316) is connected to the housing (313), the first rod (316) and the housing (313) delimiting the chamber (314), and wherein the plurality of light transmitting members (312) are arranged sequentially between the first rod (316) and the second rod (317) and connecting the first rod (316) to the second rod (317).

4. The grill light assembly (A) according to claim 3, wherein the light emitting assembly (300) further comprises a supporting member (320) comprising:
a first beam (321) and a second beam (322), each of which extends along the first direction (Y), wherein the first beam (321) is connected to the first rod (316) and to the grill (200), and the second beam (322) is connected to the second rod (317) and to the grill (200); and
a plurality of third beams (323) extending along a second direction (Z) perpendicular to the first direction (Y), wherein the plurality of third beams (323) are arranged sequentially between the first beam (321) and the second beam (322) and connecting the first beam (321) to the second beam (322).

5. The grill light assembly (A) according to claim 4, wherein
the first beam (321) is fixed to the first rod (316) by screwing and/or snapping, and/or the first beam (321) is fixed to the grill (200) by screwing and/or snapping.

6. The grill light assembly (A) according to claim 4, wherein
the second beam (322) is fixed to the second rod (317) by screwing and/or snapping, and/or the second beam (322) is fixed to the grill (200) by screwing and/or snapping.

7. The grill light assembly (A) according to ant one of claims 4 to 6, wherein
each of the plurality of light transmitting members (312) comprises a reflective surface (3121) having a textured structure and sheltered by a corresponding third beam (323) of the plurality of third beams (323).

8. The grill light assembly (A) according to claim 7, wherein
each of the plurality of light transmitting members (312) further comprises a light transmittance surface (3122) opposite to the reflective surface (3121), and the grill (200) shelters an edge portion (3123) of the light transmittance surface (3122).

9. The grill light assembly (A) according to any one of claims 4 to 6, wherein the grill light assembly (A) further comprises a skin reinforcement (400) fixedly connected to an end of the grill (200) along the second direction (Z) and sheltering the light emitting assembly (300).

10. A vehicle, comprising the grill light assembly according to any one of claims 1 to 9.
